# EUROPEAN PATENT APPLICATION

(11) **EP 2 637 367 A1**
(43) Date of publication of application: **11.09.2013**
(21) Application number: 11838274.6
(22) Date of filing: 07.11.2011
(51) Int. Cl.: H04L 12/58, H04W 4/14, G05B 19/02, H04B 7/26

(54) **METHOD FOR CONTROLLING REMOTE DEVICE THROUGH SMS AND DEVICE THEREFOR**

(30) Priority: 11.11.2010 US 412550 P; 05.11.2010 US 410496 P
(71) Applicant: Samsung Electronics Co., Ltd, Gyeonggi-do 443-742 (KR)
(72) Inventor: KIM, Tae-Jeoung, Suwon-si Gyeonggi-do 443-740 (KR); AHN, Sung-Wook, Seoul 121-230 (KR); KANG, Man-Seok, Yongin-si Gyeonggi-do 446-879 (KR); PARK, Sung-Jin, Hwaseong-si Gyeonggi-do 445-754 (KR)
(74) Representative: Gover, Richard Paul
(86) International application number: PCT/KR2011/008406
(87) International publication number: WO 2012/060669

(57) **Abstract**

The present invention relates to a method for remotely controlling a device through a mobile network, and a device which converts a command into a text which is recorded in a short message field of an SMS message when a user inputs the command for remote control, transmits the text by dividing the text into a plurality of SMS messages in case the length of the text is longer than the size of the short message field, and delivers various SMS commands to a remote device through the SMS message regardless of the length of the text by determining the command by using information included in the text.

## Description

### TECHNICAL FIELD

The present invention relates to a method and apparatus for remotely controlling a device via a mobile communication network.

### BACKGROUND ART

Machine to Machine (M2M) technology provides measurement, monitoring, controlling, and tracking of remote devices, and various technologies using the M2M technology are under study.

In particular, being a basis, from which new profits may be created, for mobile network operators (MNOs), various services that use communication networks and information technology (IT) systems are being researched. Currently, research is actively conducted on remotely controlling devices via mobile communication networks.

One simplest method is controlling devices using a short messaging service (SMS) protocol. However, there are many constrictions when SMS protocols are used. In general, a SMS message has a size of 140 Octet, and a user data field on which contents input by the user is written is 134 Octet out of the size at the largest, and thus a length (size) of strings for controlling a remote device is limited. Accordingly, a command for controlling a device should be short and simple, and thus it is difficult to control a remote device as desired by a user with a single user input.

### DETAILED DESCRIPTION OF THE INVENTION

### TECHNICAL PROBLEM

The present invention provides a method and apparatus for easily controlling various functions of a remote device via a short messaging service (SMS) message.

### TECHNICAL SOLUTION

According to an aspect of the present invention, there is provided a method of controlling a remote device by using a short messaging service (SMS), the method comprising: dividing a text for controlling the remote device, into a plurality of text portions; generating a plurality of SMS messages, each including one of the text portions as independent user data; and transmitting the plurality of SMS messages to the remote device, wherein each of the SMS messages includes information necessary for the remote device to restore the text from the plurality of SMS messages.

The information may indicate the total number of the plurality of SMS messages and the order of a text portion of a corresponding SMS message among the total text portions.

The text may comprise at least one of an index number to appoint one of commands stored in the remote device and a URL which is used to download metadata describing a predetermined command from an external server.

The text may comprise information indicating in which format, among an index number and a URL, the command is included in the text.

In the dividing the text, the text may be divided such that a size of a text portion does not exceed a size of a Short message field allowed in a mobile communication network that provides SMS.

When the text includes a URL with which to download metadata describing a predetermined command from an external service, the dividing a text may comprise converting the URL using a predetermined URL shortening method.

According to another aspect of the present invention, there is provided a computer readable recording medium having embodied thereon a computer program for executing the method described above.

According to another aspect of the present invention, there is provided A method of processing a short messaging service (SMS) message, the method comprising: extracting a text portion from each user data field of a plurality of SMS messages; restoring the entire text by combining the extracted text portions; determining a command by using the restored, entire text; and executing the determined command, wherein each of the plurality of SMS messages includes information necessary to restore the entire text from the SMS messages.

The data may indicate the total number of the SMS messages and the order of a text portion of a corresponding SMS message among the total text portions.

The determining a command may comprise selecting a command from predetermined command lists by using an index number included in the entire text or accessing a URL included in the entire text to download metadata describing the command.

The determining a command may comprise determining in which format, among an index number and a URL, the command is included in the text by referring to a predetermined position of the entire text.

According to another aspect of the present invention, there is provided a computer readable recording medium having embodied thereon a computer program for executing the method described above.

According to another aspect of the present invention, there is provided a remote control device, comprising: a memory in which at least one program is stored; and a processor executing the at least one program, wherein the at least one program comprises instructions for executing a method comprising: dividing a text for controlling the remote device, into a plurality of text portions; generating a plurality of SMS messages, each including one of the text portions as independent user data; and transmitting the plurality of SMS messages to the remote device, wherein each of the SMS messages includes information necessary for the remote device to restore the text from the plurality of SMS messages.

The information may indicate the total number of the plurality of SMS messages and the order of a text portion of a corresponding SMS message among the total text portions.

The text may comprise at least one of an index number to appoint one of commands stored in the remote device and a URL which is used to download metadata describing a predetermined command from an external server.

The text may comprise information indicating in which format, among an index number and a URL, the command is included in the text by referring to a predetermined position of the entire text.

In the dividing the text, the text may be divided such that a size of a text portion does not exceed a size of a Short message field allowed in a mobile communication network that provides SMS.

When the text includes a URL with which to download metadata describing a predetermined command from an external service, the dividing a text may comprise converting the URL using a predetermined URL shortening method.

According to another aspect of the present invention, there is provided a short messaging service (SMS) processor, comprising: a memory in which at least one program is stored; and a processor executing the at least one program, wherein the at least one program comprises instructions for executing a method comprising: extracting a text portion from each user data field of a plurality of SMS messages; restoring the entire text by combining the extracted text portions; determining a command by using the restore, entire text; and executing the determined command, wherein each of the plurality of SMS messages includes information necessary to restore the entire text from the SMS messages.

The data may indicate the total number of the plurality of SMS messages and the order of a text portion of a corresponding SMS message among the total text portions.

The determining a command may comprise selecting a command from predetermined command lists by using an index number included in the entire text or accessing a URL included in the entire text to download metadata describing the command.

The determining a command may comprise determining in which format, among an index number and a URL, the command is included in the text by referring to a predetermined position of the entire text.

### ADVANTAGEOUS EFFECTS

According to the embodiments of the present invention, even when a length of a text for controlling a remote device is long, the text is divided into a plurality of short messaging service (SMS) messages to be transmitted, and thus various commands may be written without being limited by a user data size of the SMS messages. In addition, commands including complicated or long contents may be stored in an external server in advance, and a user may just transmit a universal resource locator (URL) thereof via a SMS message, and thus a complicated operation of the remote device may be easily controlled.

### BRIEF DESCRIPTION OF THE DRAWINGS

FIG. 1 is a flowchart illustrating a method of controlling a remote device according to an embodiment of the present invention;

FIG. 2 is a flowchart illustrating an operation of a control device according to an embodiment of the present invention;

FIG. 3 is a flowchart illustrating an operation of processing a short messaging service (SMS) message in a remote device according to an embodiment of the present invention;

FIG. 4 is a flowchart illustrating an operation of a remote device according to an embodiment of the present invention;

FIG. 5 is a conceptual diagram illustrating division of a SMS message according to an embodiment of the present invention;

FIG. 6 illustrates a format of a SMS message according to an embodiment of the present invention;

FIG. 7 illustrates a user data format according to an embodiment of the present invention;

FIGS. 8A and 8B are conceptual diagrams for explaining an embodiment of the present invention;

FIG. 9 illustrates a user data format according to another embodiment of the present invention;

FIG. 10 is a conceptual diagram for explaining another embodiment of the present invention;

FIG. 11 illustrates a user data format according to another embodiment of the present invention; and

FIG. 12 is a schematic view of structures of a control device and a remote device according to an embodiment of the present invention.

### BEST MODE FOR CARRYING OUT THE INVENTION

According to an aspect of the present invention, there is provided a method of controlling a remote device by using a short messaging service (SMS), the method comprising: dividing a text for controlling the remote device, into a plurality of text portions; generating a plurality of SMS messages, each including one of the text portions as independent user data; and transmitting the plurality of SMS messages to the remote device, wherein each of the SMS messages includes information necessary for the remote device to restore the text from the plurality of SMS messages.

The information may indicate the total number of the plurality of SMS messages and the order of a text portion of a corresponding SMS message among the total text portions.

The text may comprise at least one of an index number to appoint one of commands stored in the remote device and a URL which is used to download metadata describing a predetermined command from an external server.

The text may comprise information indicating in which format, among an index number and a URL, the command is included in the text.

In the dividing the text, the text may be divided such that a size of a text portion does not exceed a size of a Short message field allowed in a mobile communication network that provides SMS.

When the text includes a URL with which to download metadata describing a predetermined command from an external service, the dividing a text may comprise converting the URL using a predetermined URL shortening method.

According to another aspect of the present invention, there is provided a computer readable recording medium having embodied thereon a computer program for executing the method described above.

According to another aspect of the present invention, there is provided A method of processing a short messaging service (SMS) message, the method comprising: extracting a text portion from each user data field of a plurality of SMS messages; restoring the entire text by combining the extracted text portions; determining a command by using the restored, entire text; and executing the determined command, wherein each of the plurality of SMS messages includes information necessary to restore the entire text from the SMS messages.

The data may indicate the total number of the SMS messages and the order of a text portion of a corresponding SMS message among the total text portions.

The determining a command may comprise selecting a command from predetermined command lists by using an index number included in the entire text or accessing a URL included in the entire text to download metadata describing the command.

The determining a command may comprise determining in which format, among an index number and a URL, the command is included in the text by referring to a predetermined position of the entire text.

According to another aspect of the present invention, there is provided a computer readable recording medium having embodied thereon a computer program for executing the method described above.

According to another aspect of the present invention, there is provided a remote control device, comprising: a memory in which at least one program is stored; and a processor executing the at least one program, wherein the at least one program comprises instructions for executing a method comprising: dividing a text for controlling the remote device, into a plurality of text portions; generating a plurality of SMS messages, each including one of the text portions as independent user data; and transmitting the plurality of SMS messages to the remote device, wherein each of the SMS messages includes information necessary for the remote device to restore the text from the plurality of SMS messages.

The information may indicate the total number of the plurality of SMS messages and the order of a text portion of a corresponding SMS message among the total text portions.

The text may comprise at least one of an index number to appoint one of commands stored in the remote device and a URL which is used to download metadata describing a predetermined command from an external server.

The text may comprise information indicating in which format, among an index number and a URL, the command is included in the text by referring to a predetermined position of the entire text.

In the dividing the text, the text may be divided such that a size of a text portion does not exceed a size of a Short message field allowed in a mobile communication network that provides SMS.

When the text includes a URL with which to download metadata describing a predetermined command from an external service, the dividing a text may comprise converting the URL using a predetermined URL shortening method.

According to another aspect of the present invention, there is provided a short messaging service (SMS) processor, comprising: a memory in which at least one program is stored; and a processor executing the at least one program, wherein the at least one program comprises instructions for executing a method comprising: extracting a text portion from each user data field of a plurality of SMS messages; restoring the entire text by combining the extracted text portions; determining a command by using the restore, entire text; and executing the determined command, wherein each of the plurality of SMS messages includes information necessary to restore the entire text from the SMS messages.

The data may indicate the total number of the plurality of SMS messages and the order of a text portion of a corresponding SMS message among the total text portions.

The determining a command may comprise selecting a command from predetermined command lists by using an index number included in the entire text or accessing a URL included in the entire text to download metadata describing the command.

The determining a command may comprise determining in which format, among an index number and a URL, the command is included in the text by referring to a predetermined position of the entire text.

### MODE OF THE INVENTION

The present invention will now be described more fully with reference to the accompanying drawings, in which exemplary embodiments of the invention are shown.

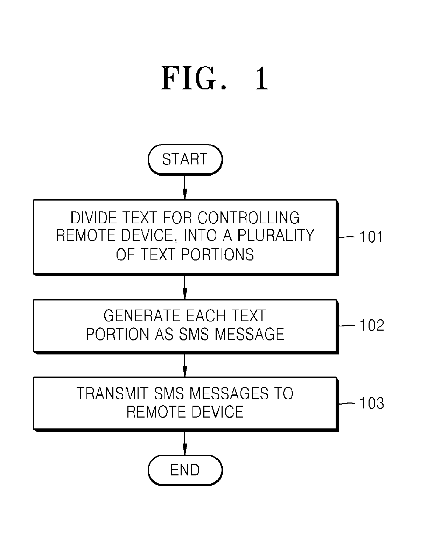

FIG. 1 is a flowchart illustrating a method of controlling a remote device according to an embodiment of the present invention. According to the current embodiment of the present invention, it is assumed that a size of a text for controlling a remote device is larger than a size of a piece of user data allowed for a single short messaging service (SMS) message.

In operation 101, a control device divides a text for controlling a remote device, into a plurality of text portions.

Here, a text refers to a string for controlling a remote device, and refers to data that is written to a Short message field among a user data field of a SMS message. That is, a text described below refers to a string which may be read from a SMS message, and the present invention provides a mechanism with which a remote device may be controlled by using the string.

Since one text portion, i.e. a part of the text, needs to be included in a single SMS message, the one text portion is divided not to exceed a previously set value.

According to the current embodiment of the present invention, a command for controlling a remote device is directly included in a text, or a uniform resource locator (URL) for accessing and downloading metadata describing commands is included in the text. Metadata describes various information related to a corresponding command for controlling remote devices and is stored in an external server in advance.

When a URL is included in a text, the URL may preferably be shortened by using a URL shortening method before dividing the text. The URL shortening method is well-known in the art, and thus description thereof will be omitted.

In operation 102, the control device generates the text portions each into a single SMS message. That is, each text portion is an independent piece of user data that constitutes a SMS message, and thus SMS messages corresponding to the number of text portions are generated. The SMS messages include information necessary for a reception part, that is, a remote device, to restore the original text. For example, each SMS message includes information indicating the number of entire SMS messages constituting the contents of an original text and the order, i.e. the sequence number of the text portion of the SMS message among the divided text portions.

In operation S103, the control device transmits the SMS messages generated in operation 102 to a remote device.

As described above, according to the present invention, even if a length of a text for controlling a remote device is long, the text is divided into a plurality of SMS messages and transmitted, and thus commands may be written in various manners without being limited by user data sizes of the SMS messages. Also, commands including complicated or long contents may be stored in an external server as metadata in advance and the user needs to transmit only URL thereof via a SMS message, and thus complicated operations of a remote device may be controlled easily.

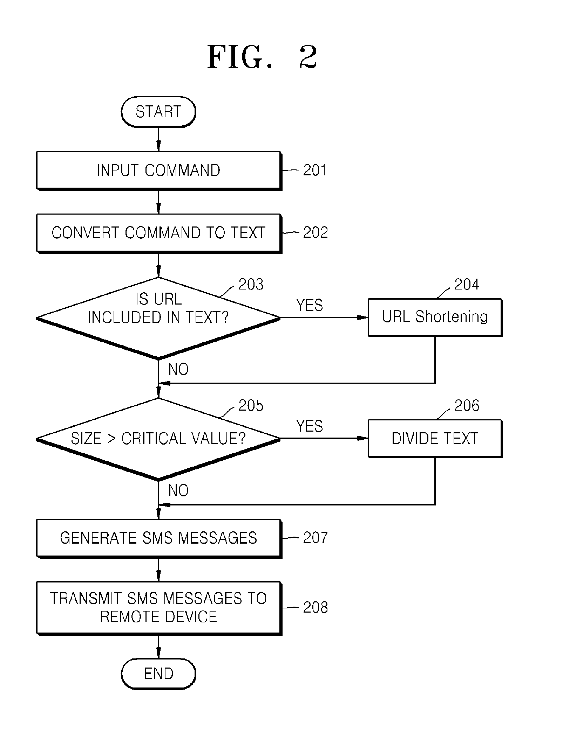

FIG. 2 is a flowchart illustrating an operation of a control device according to an embodiment of the present invention.

In operation 201, a user inputs a command for controlling a remote device via a control device. The command refers to a user-friendly command, that is, a command that is interpretable by the user. A command may be input via a web page of a user interface provided by an external server or by using an application installed in the control device.

In operation 202, the command input by the user is converted to a text. The conversion also may be conducted via an external server that provides a user interface web page or an application installed in the control device.

In operation 203, the control device checks whether a URL is included in the text.

In operation 204, if a URL is included in the text, and if it is long, the URL is shortened by using a URL shortening method.

In operation 205, a size of the text is compared with a previously set critical value. The critical value refers to a size of a Short message field that is allowed between mobile communication networks, since the text according to the present invention refers to a string that is written to a Short message field among a user data field of a SMS message. Sizes of user data of SMS messages may vary according to mobile communication operators, and thus, the critical value may preferably be a smallest value among sizes of Short message fields that are allowed in the mobile communication networks. For example, the critical value may be 80 byte.

In operation 206, if the size of the text is greater than the critical value, the text is divided into various text portions. Here, obviously, a size of each text portion should be smaller than the critical value.

In operation 207, a SMS message is generated by using the text. When the text is divided, one text portion is generated into one SMS message, and thus, as a result, the text is divided into a plurality of SMS messages.

In operation 208, the generated SMS messages are transmitted to a remote device.

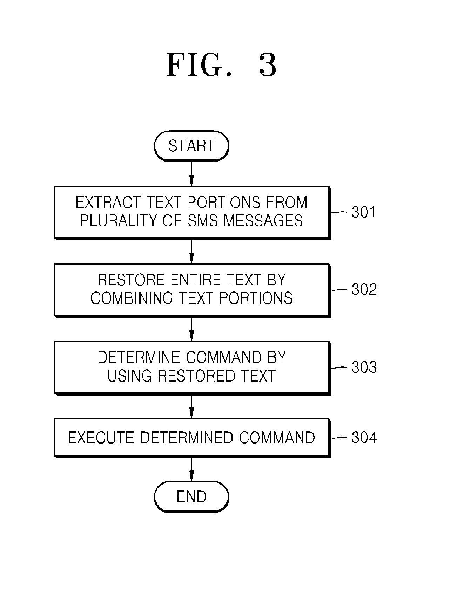

FIG. 3 is a flowchart illustrating an operation of processing a SMS message in a remote device according to an embodiment of the present invention. According to the current embodiment of the present invention, it is assumed that a text is divided into a plurality of SMS messages.

In operation 301, a remote device extracts a text portion from each of the plurality of SMS messages. In detail, a text portion is extracted from a Short message field of a user data field of each of the SMS messages.

In operation 302, the extracted text portions are combined to restore the entire text, that is, the original text. As described above, since the SMS messages include information about the number of the entire SMS messages that are necessary to restore the original text and the order, i.e. the sequence number, of the SMS messages, the original text may be restored regardless of the order in which the SMS messages are received.

In operation 303, a command is determined by using the restored text. If a command itself is included in the text, the command may be obtained right away. However, for example, if an index number indicating a command is included in the text and command lists corresponding to the index number are stored in the remote device in advance, the remote device may determine a command by referring to the index number.

Alternatively, if a URL is included in the text, the remote device may download metadata via the URL and parse the metadata to determine a command.

In order that the remote device is able to determine which method to use to obtain a command, information indicating in which format, among an index number and a URL, a command is included in a text may be included in the text.

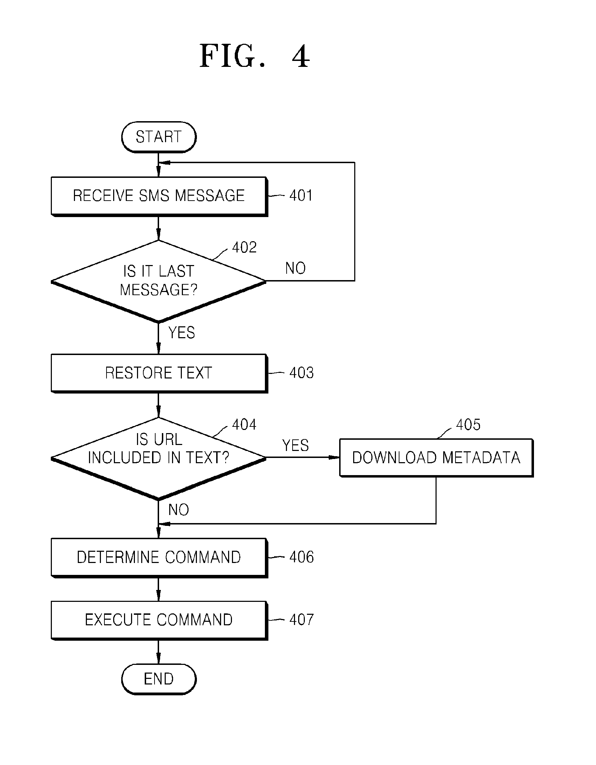

FIG. 4 is a flowchart illustrating an operation of a remote device according to an embodiment of the present invention.

In operation 401, the remote device receives a SMS message. According to the current embodiment of the present invention, it is assumed that a SMS message is a SMS message for controlling the remote device.

In operation 402, the remote device determines whether the received SMS message is the last one. The determination may be made by referring to information indicating the total number of the entire SMS messages and the sequence number of each of the SMS messages. If the received SMS message is not the last SMS message, reception of a next SMS message is waited, and if the received SMS message is the last SMS message, the method proceeds to operation 403.

In operation 403, the received SMS messages are combined to restore a text.

In operation 404, whether a URL is included in the text is determined.

In operation 405, if a URL is included in the text, metadata is downloaded from an external server via the URL.

In operation 406, a command is determined. If a URL is not included in the text as a result of determination in operation 404, a command is included in the text, and thus the text is parsed to determine a command. For example, as described above, a command may be determined by using a command list that is stored in advance in the remote device and index information included in the text. Alternatively, if a URL is included in the text as a result of determination in operation 404, metadata is parsed and analyzed to determine a command.

In operation 407, the remote device executes the determined command.

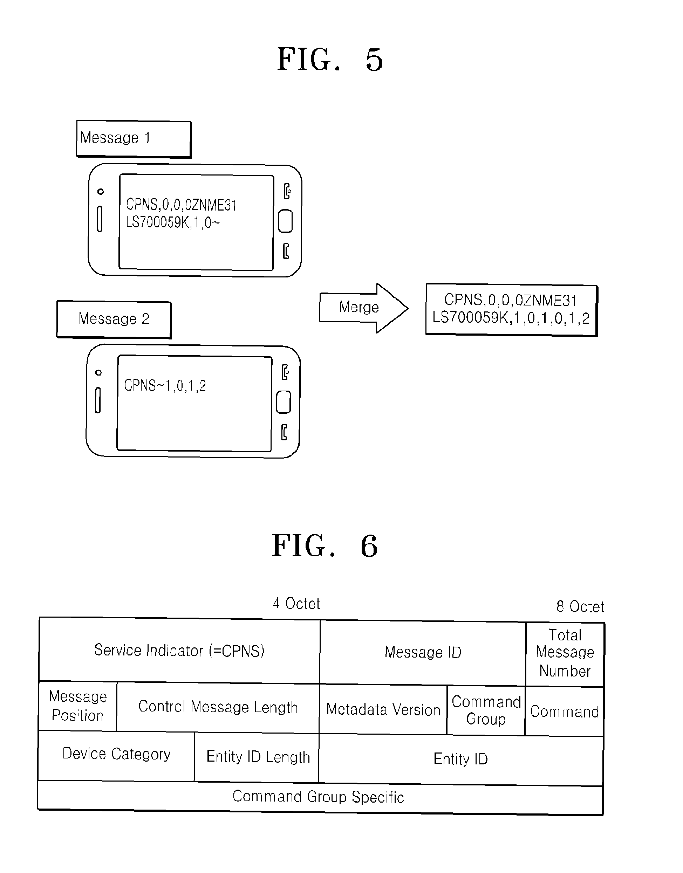

FIG. 5 is a conceptual diagram illustrating division of a SMS message according to an embodiment of the present invention.

According to the current embodiment of the present invention, it is assumed that a command is not transmitted via a URL but is directly inserted into a text. As illustrated in FIG. 5, if a text size is larger than a size of a SMS protocol or a size limited by a mobile communication operator, the text is divided into a plurality of text portions and transmitted to a remote device via a plurality of SMS messages.

FIG. 6 illustrates a format of a SMS message according to an embodiment of the present invention.

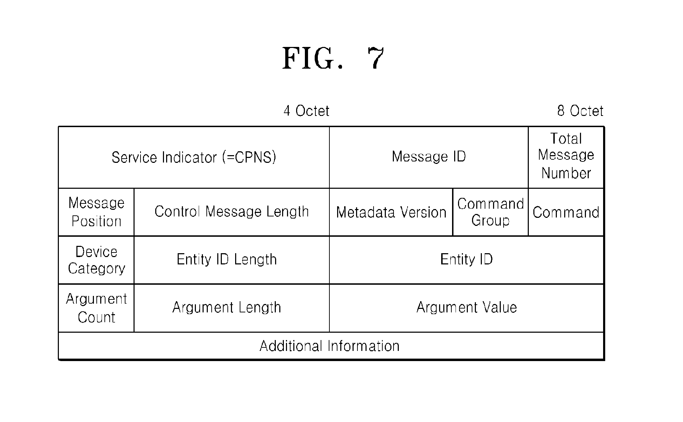

In detail, the format illustrated in FIG. 6 denotes a user data field of a SMS message. That is, while a user field includes various sub-fields, with reference to FIG. 6, fields that are common in all of the embodiments of the present invention will be described. That is, according to the current embodiment of the present invention, a text may directly include a command or may instead include a URL of metadata, and contents of some fields may vary in each case. Referring to FIG. 6, portions that vary according to each case are marked as a Command Group Specific field, and this field will be described later in detail with reference to FIGS. 7 through 11.

A Service Indicator field indicates whether a SMS message is a message for controlling a remote device or not.

A Message ID field is where an identifier for distinguishing messages is written. Even when a single text is formed of a plurality of SMS messages, a value of the Message ID field increases sequentially.

A Total Message Number field indicates the total number of SMS messages of a text.

A Message Position field indicates a position of a text portion included in a corresponding SMS message among the entire text, that is, the sequence number of the text portion among the original text.

A Control Message Length field indicates a length of remaining portions of a user data field except the Service Indicator field, the Message ID field, the Total Message Number field, the Message Position field, and the Control Message Length field.

A Metadata Version field indicates a version of metadata. The metadata version may be referred, for example, in a metadata server, a control device, a remote device, and a gateway between the control device and the remote device. A text for controlling a remote device may be regarded as valid only when versions of metadata of the nodes are identical.

A Command Group field appoints a format of contents related to commands included in user data, that is, a format of a portion written as Command group specific. That is, contents of user data be a text including commands or a text including a URL or information indicating a result of executing requested commands or the like. Values written to the Command Group field vary according to each case.

A command for a remote device or a gateway is input to a Command field. In this field, an index number with which to search for a predetermined command in a command table stored in the remote device may be written, or a PIN number set up may be requested to the remote device or the gateway, or advertisement of services for SMS messages may be requested.

A Device Category field indicates a category of a remote device.

An Entity ID Length field denotes an ID length of a remote device, and an Entity ID denotes an identifier of a remote device.

Hereinafter, a portion of a SMS message whose format varies according to each case, that is, the portion marked as Command Group Specific in FIG. 6 will be described.

FIG. 7 illustrates a user data format according to an embodiment of the present invention.

According to the current embodiment, it is assumed that a URL is not included in a text. Description of the fields described above with reference to FIG. 6 will be omitted.

An Argument Count field indicates the number of arguments that are necessary to execute a control command designated by a text. For example, a command for turning on or off TV requires just calling a method related to power control, and thus no argument is needed. However, a command for changing to a particular a channel requires an argument indicating a corresponding channel when calling a method for changing channels, and here a value of the Argument Count field is 1.

An Argument Length field indicates a length of an argument.

An Argument Value field indicates an argument value.

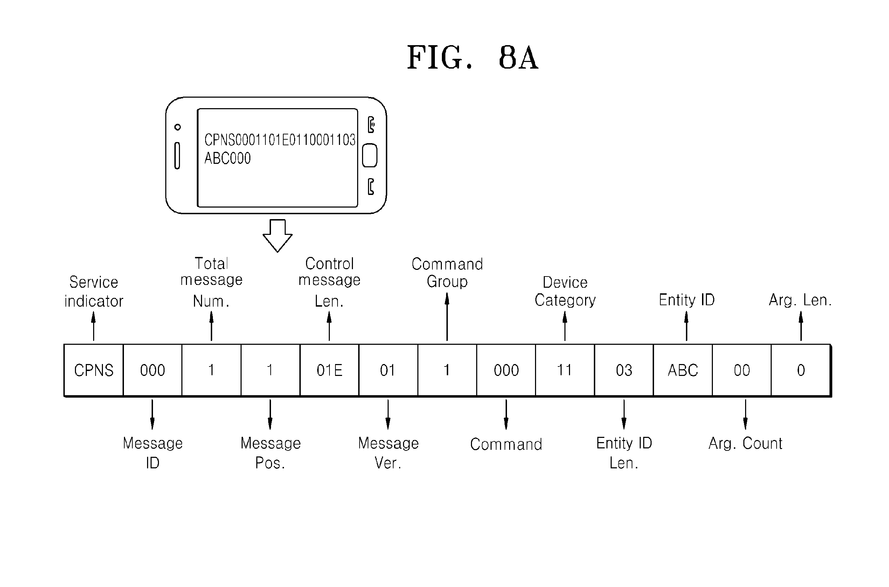

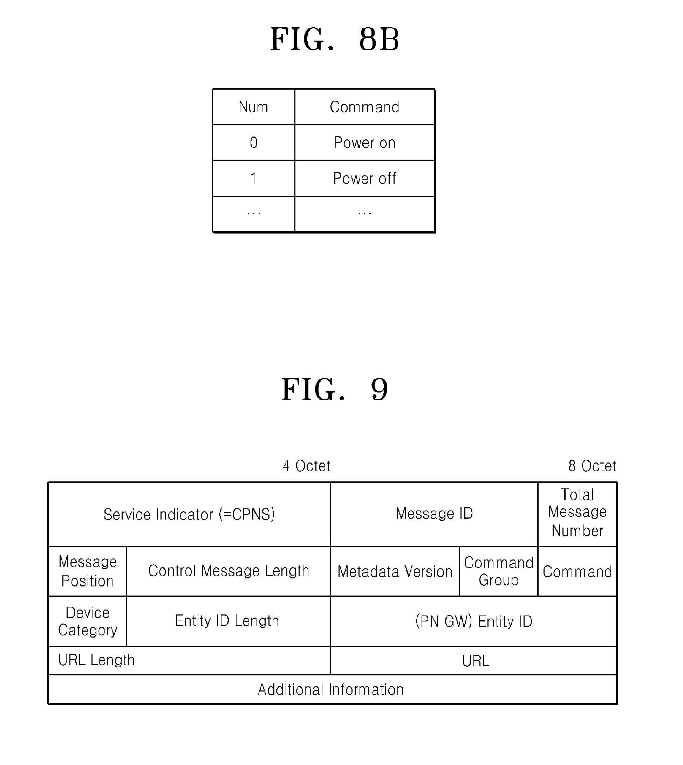

FIGS. 8A and 8B are conceptual diagrams illustrating an embodiment of the present invention.

According to the current embodiment, it is assumed that a URL is not included in a text. Accordingly, as illustrated in FIG. 8A, a text is parsed according to a user data format as illustrated in FIG. 7. For example, if a Service Identifier field value is a converged personal network service (CPNS), a remote device recognizes that a SMS message in this embodiment is a message for remote control, and when the remote device checks that a Command Group field value is 1, the remote device recognizes that not the URL but a command is to be extracted from the text. An index number written to the Command field value is 000, and thus, with reference to a table stored in the remote device in advance as illustrated in FIG. 8B, the remote device determines that a command included in the text commands to turn on power, and turns on power.

FIG. 9 illustrates a user data format according to another embodiment of the present invention. According to the current embodiment, it is assumed that a URL is included in a text. Description of the fields described above with reference to FIG. 6 will be omitted.

A URL Length field indicates a length of a URL.

A URL with which metadata may be accessed is written to a URL field. A control device may access the URL and download metadata and then parse the metadata to check a command.

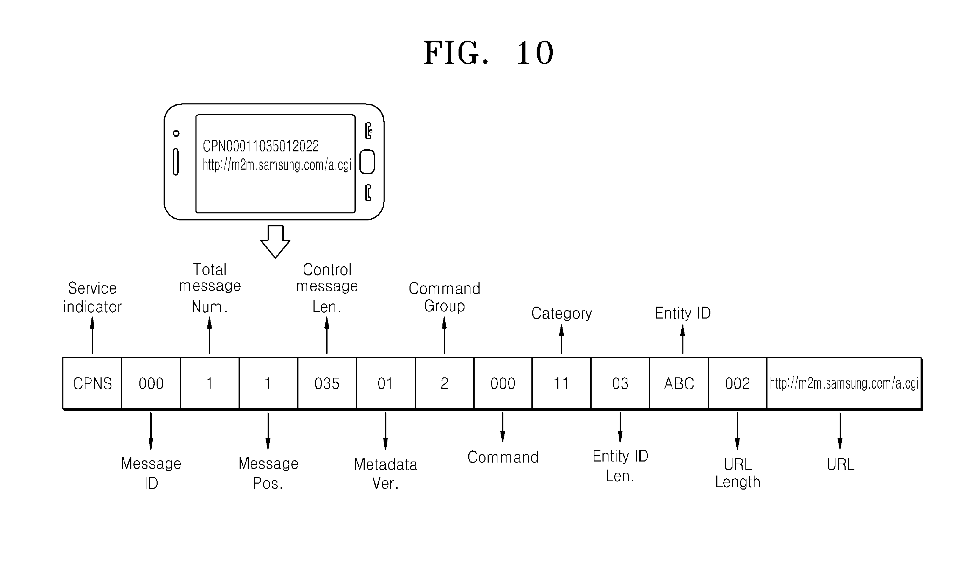

FIG. 10 is a conceptual diagram for explaining another embodiment of the present invention.

According to the current embodiment of the present invention, when it is checked that a Service Identifier field value denotes a CPNS, a remote device perceives that a SMS message in this embodiment is a message for remote control, and when it is checked that a Command Group field value is 2, the remote device perceives that a URL is to be extracted from the text. The remote device accesses a URL written to a URL field and downloads metadata, and then parses the metadata to identify a command, and executes the command.

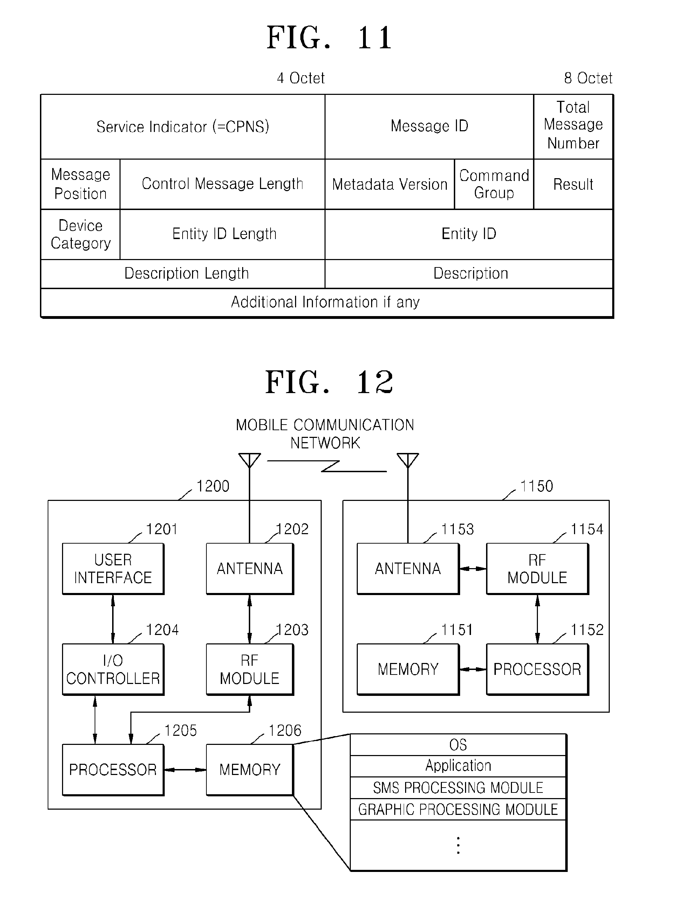

FIG. 11 illustrates a user data format according to another embodiment of the present invention.

According to the current embodiment of the present invention, a user data field indicates that a SMS message is a response message to a control request. A Result field indicates a response to a control request, and for example, a value indicating OK or ERROR may be written to the Result field. A Description Length field indicates a length of a Description field, and description of the response is written to the Description field.

FIG. 12 is a schematic view of structures of a control device and a remote device according to an embodiment of the present invention.

As illustrated in FIG. 12, a control device 1100 according to the current embodiment of the present invention includes a user interface 1101, an antenna 1102, an RF module 1103, an I/O controller 1104, a processor 1105, and a memory 1106.

The processor 1105 controls the I/O controller 1104 to receive a control text from a user via the user interface 1101. Also, the processor 1105 executes predetermined programs stored in the memory 1106 to transmit a SMS message to a remote device via the RF module 1103 and the antenna 1102.

In the memory 1106, various programs such as operating systems, applications, or graphic processing modules are stored. The predetermined programs include instructions for executing the procedures described with reference to FIG. 1. That is, a text input by a user is divided into a plurality of text portions, and each of the text portions is generated as one SMS message, and the generated SMS messages are transmitted to the remote device by executing the instructions.

As illustrated in FIG. 12, the remote device 1150 includes a memory 1151, a processor 1152, a RF module 1154, and an antenna 1153. When a SMS message is received via the antenna 1153 and the RF module 1154, the processor 1152 executes a program stored in the memory 1151 to execute a command requested by the control device 1101. In other words, a predetermined program stored in the memory 1151 extracts a text portion from each of the SMS messages and combines the extracted, plurality of text portions to restore the entire text. Then, by using the restored entire text, commands that are needed to determine commands to be executed are stored.

The embodiments of the present invention can be written as computer programs and can be implemented in general-use digital computers that execute the programs using a computer readable recording medium.

Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

While this invention has been particularly shown and described with reference to preferred embodiments thereof, it will be understood by those skilled in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method of controlling a remote device by using a short messaging service (SMS), the method comprising:
dividing a text for controlling the remote device, into a plurality of text portions;
generating a plurality of SMS messages, each including one of the text portions as independent user data; and
transmitting the plurality of SMS messages to the remote device,
wherein each of the SMS messages includes information necessary for the remote device to restore the text from the plurality of SMS messages.

2. The method of claim 1, wherein the information indicates the total number of the plurality of SMS messages and the order of a text portion of a corresponding SMS message among the total text portions.

3. The method of claim 1, wherein the text comprises at least one of an index number to appoint one of commands stored in the remote device and a URL which is used to download metadata describing a predetermined command from an external server.

4. The method of claim 3, wherein the text comprises information indicating in which format, among an index number and a URL, the command is included in the text.

5. The method of claim 1, wherein in the dividing the text, the text is divided such that a size of a text portion does not exceed a size of a Short message field allowed in a mobile communication network that provides SMS.

6. The method of claim 1, wherein when the text includes a URL with which to download metadata describing a predetermined command from an external service, the dividing a text comprises converting the URL using a predetermined URL shortening method.

7. A method of processing a short messaging service (SMS) message, the method comprising:
extracting a text portion from each user data field of a plurality of SMS messages;
restoring the entire text by combining the extracted text portions;
determining a command by using the restored, entire text; and
executing the determined command,
wherein each of the plurality of SMS messages includes information necessary to restore the entire text from the SMS messages.

8. The method of claim 7, wherein the data indicates the total number of the SMS messages and the order of a text portion of a corresponding SMS message among the total text portions.

9. The method of claim 7, wherein the determining a command comprises selecting a command from predetermined command lists by using an index number included in the entire text or accessing a URL included in the entire text to download metadata describing the command.

10. The method of claim 9, wherein the determining a command comprises determining in which format, among an index number and a URL, the command is included in the text by referring to a predetermined position of the entire text.

11. A remote control device, comprising:
a memory in which at least one program is stored; and
a processor executing the at least one program,
wherein the at least one program comprises instructions for executing a method comprising:
dividing a text for controlling the remote device, into a plurality of text portions;
generating a plurality of SMS messages, each including one of the text portions as independent user data; and
transmitting the plurality of SMS messages to the remote device,
wherein each of the SMS messages includes information necessary for the remote device to restore the text from the plurality of SMS messages.

12. The remote device of claim 11, wherein the information indicates the total number of the plurality of SMS messages and the order of a text portion of a corresponding SMS message among the total text portions.

13. The remote device of claim 11, wherein the text comprises at least one of an index number to appoint one of commands stored in the remote device and a URL which is used to download metadata describing a predetermined command from an external server.

14. The remote device of claim 11, wherein the text comprises information indicating in which format, among an index number and a URL, the command is included in the text by referring to a predetermined position of the entire text.

15. The remote device of claim 11, wherein in the dividing the text, the text is divided such that a size of a text portion does not exceed a size of a Short message field allowed in a mobile communication network that provides SMS.

16. The remote device of claim 11, wherein when the text includes a URL with which to download metadata describing a predetermined command from an external service, the dividing a text comprises converting the URL using a predetermined URL shortening method.

17. A short messaging service (SMS) processor, comprising:
a memory in which at least one program is stored; and
a processor executing the at least one program,
wherein the at least one program comprises instructions for executing a method comprising:
extracting a text portion from each user data field of a plurality of SMS messages;
restoring the entire text by combining the extracted text portions;
determining a command by using the restore, entire text; and
executing the determined command,
wherein each of the plurality of SMS messages includes information necessary to restore the entire text from the SMS messages.

18. The SMS message processor of claim 17, wherein the data indicates the total number of the plurality of SMS messages and the order of a text portion of a corresponding SMS message among the total text portions.

19. The SMS message processor of claim 17, wherein the determining a command comprises selecting a command from predetermined command lists by using an index number included in the entire text or accessing a URL included in the entire text to download metadata describing the command.

20. The SMS message processor of claim 19, wherein the determining a command comprises determining in which format, among an index number and a URL, the command is included in the text by referring to a predetermined position of the entire text.

21. A computer readable recording medium having embodied thereon a computer program for executing the method of claim 1.
